# FASCICULE DE BREVET EUROPEEN

(11) **EP 3 150 429 B1**
(45) Date de publication et mention de la délivrance du brevet: **18.03.2020**
(21) Numéro de dépôt: 16000717.5
(22) Date de dépôt: 26.03.2016
(51) Int. Cl.: B60P 3/32, B60P 3/36

(54) **KIT FOURGON-LOISIRS AMOVIBLE ET TRANSFORMABLE**
FREIZEIT-VAN KIT ABNEHMBAR UND UMWANDELBAR
REMOVABLE AND TRANSFORMABLE VAN-LEISURE KIT

(30) Priorité: 02.04.2015 FR 1500692
(43) Date de publication de la demande: 05.04.2017
(73) Titulaire: Dorin, Jacques, 42330 Saint-Galmier (FR)
(72) Inventeur: Dorin, Jacques, 42330 Saint-Galmier (FR)
(74) Mandataire: Cabinet Laurent & Charras

(56) Documents cités:
- EP-A2- 0 201 803
- EP-A2- 2 676 838
- DE-A1-102005 020 613
- DE-U1- 29 503 599
- DE-U1- 29 513 761
- FR-A1- 2 546 457
- US-A- 4 027 892
- US-A- 4 311 420

## Description

La présente invention concerne la conception d'un aménagement modulaire et universel à montage rapide par une seule personne, complètement amovible, et à combinaisons multiples, de l'arrière d'un fourgon utilitaire quel que soit le type, à destination d'un usage professionnel ou de loisir (camping-car par exemple), et permettant éventuellement le double usage professionnel et de loisir, ainsi que l'utilisation de l'aménagement modulaire pour meubler tous espaces immobiliers, appartements par exemple.

La plupart des aménagements arrières proposés pour les fourgons utilitaires ou de loisirs sont fixes, différents pour chaque type de véhicule, et ne permettent qu'un type d'usage, unique et permanent, obsolète quand on change de véhicule. Certain spécialistes du véhicule de loisir proposent des aménagements amovibles (montage par 2 personnes en 15 minutes), mais qui ne sont pas universels, qui ne permettent pas la réalisation de plusieurs combinaisons sinon celle unique de « véhicule aménagé/véhicule vide » ou « jour/nuit » pour le loisir, adaptable définitivement à un seul type de véhicule, donc obsolète quand on change de véhicule, relativement encombrant à stocker, et non utilisables dans d'autres espaces immobiliers. Par exemple, on connaît le document DE 295 13 761, qui est considéré comme l'art antérieur le plus proche et décrit les caractéristiques du préambule de la revendication 1.

Le dispositif selon l'invention permet de remédier à ces inconvénients. En effet, il permet à une seule personne, de construire rapidement selon une composition de son choix, un aménagement de l'espace arrière de son fourgon utilitaire à des fins professionnelles, ou pour un usage de loisir, selon son besoin.

A partir d'un plancher personnalisé pour chaque type de véhicule (figure 1), l'usager vient construire une combinaison de son choix avec un jeu de boites strictement identiques (figure 2) qu'il vient emboiter et boulonner à l'endroit qu'il veut sur le plancher, ou par empilage les unes sur les autres (figure 3), pour composer l'une des multiples combinaisons possibles (figure 4), agrémentée de quelques boites et pièces spécialement préparées (Figure 5), complétée pour le confort par un jeu de matelas mousse amovibles (figure 6). Après usage, l'ensemble peut-être remisé et stocké par empilage dans un très petit espace (figure 7).

Les dessins annexés illustrent l'invention :

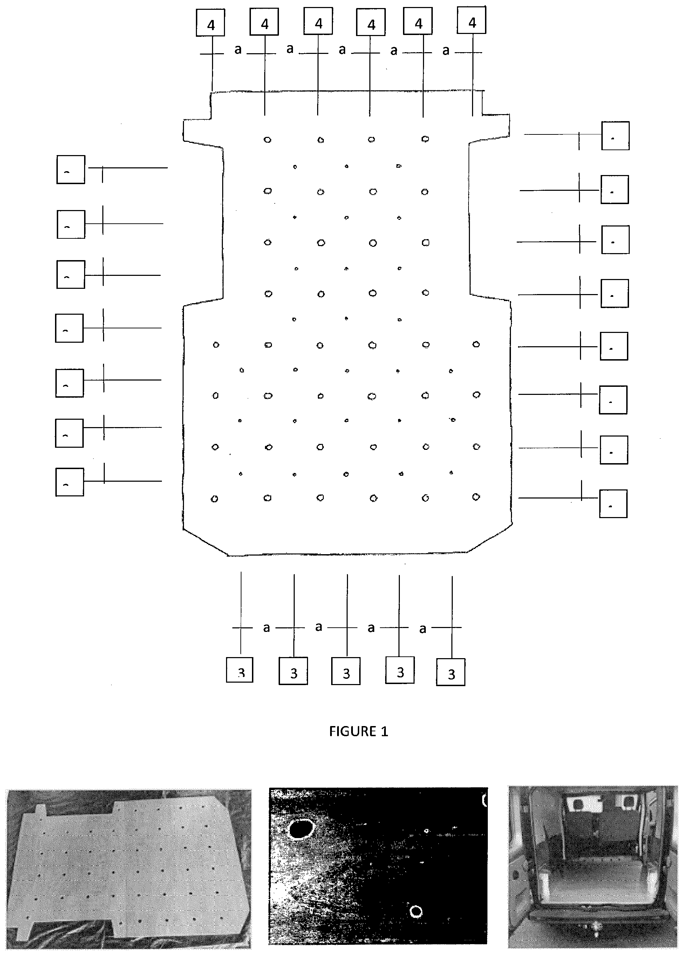

- La figure 1 représente en plan le plancher support qui vient s'adapter sur le plancher du fourgon utilitaire, et sur lequel vient s'adapter le jeu de boites de l'invention.

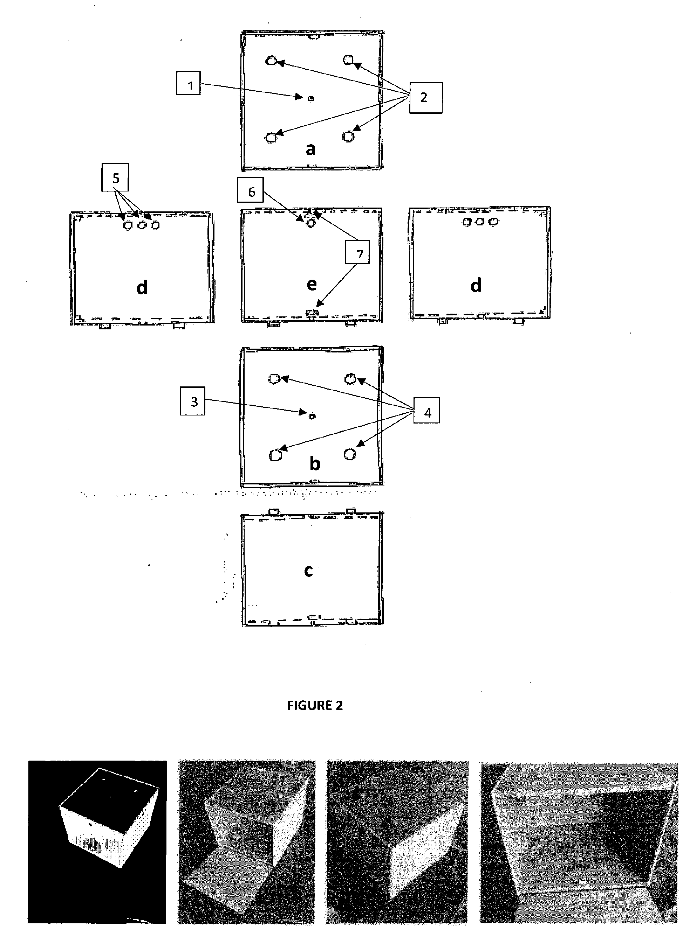

- La figure 2 représente la boite base de l'invention dessinée sur toutes ses faces et des photos.

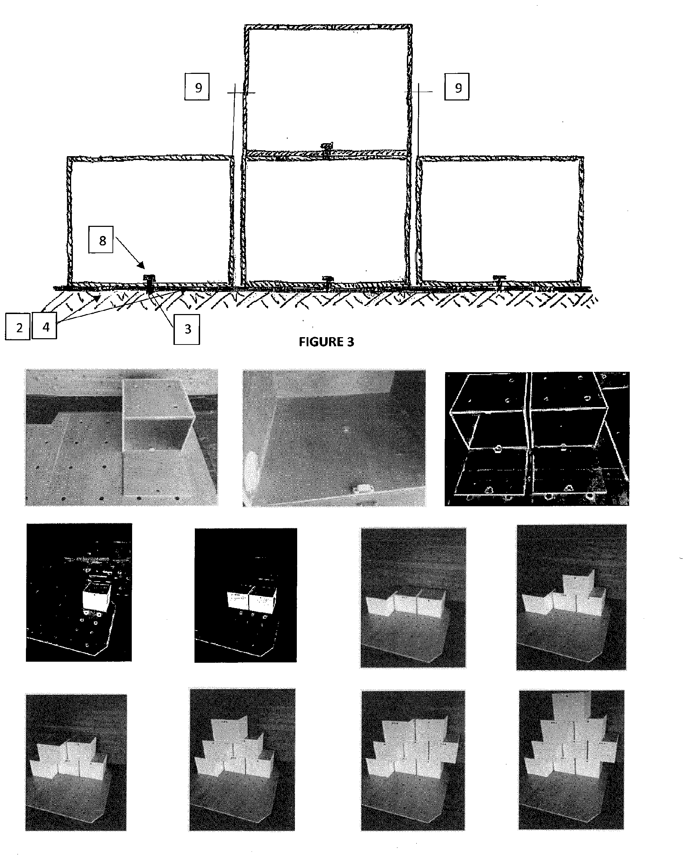

- La figure 3 représente l'assemblage des boites de l'invention entre elles et sur le plancher support par une coupe de principe et des photos.

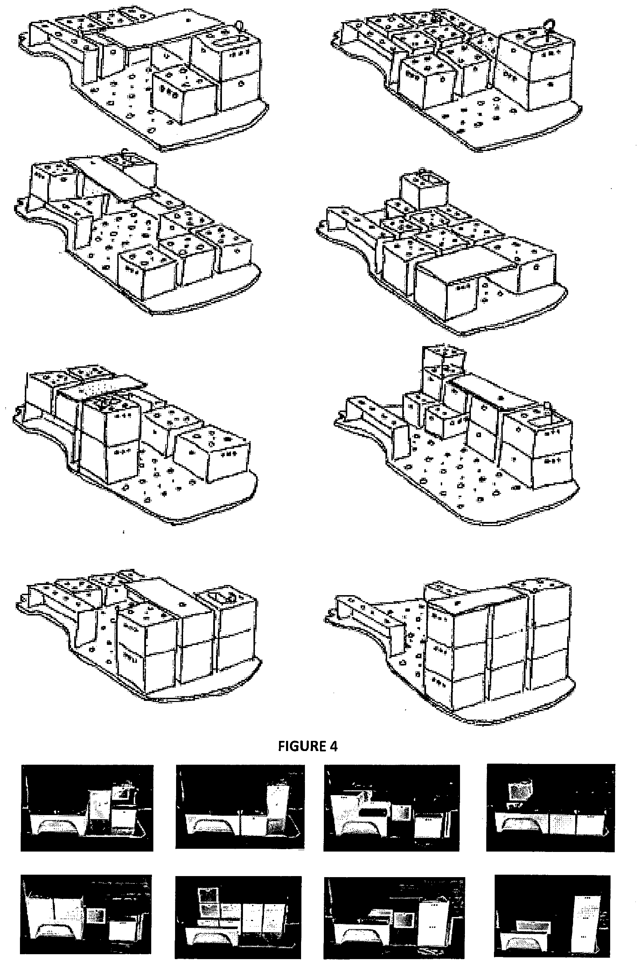

- La figure 4 représente en perspective quelques combinaisons d'assemblage possibles de l'invention et des photos.

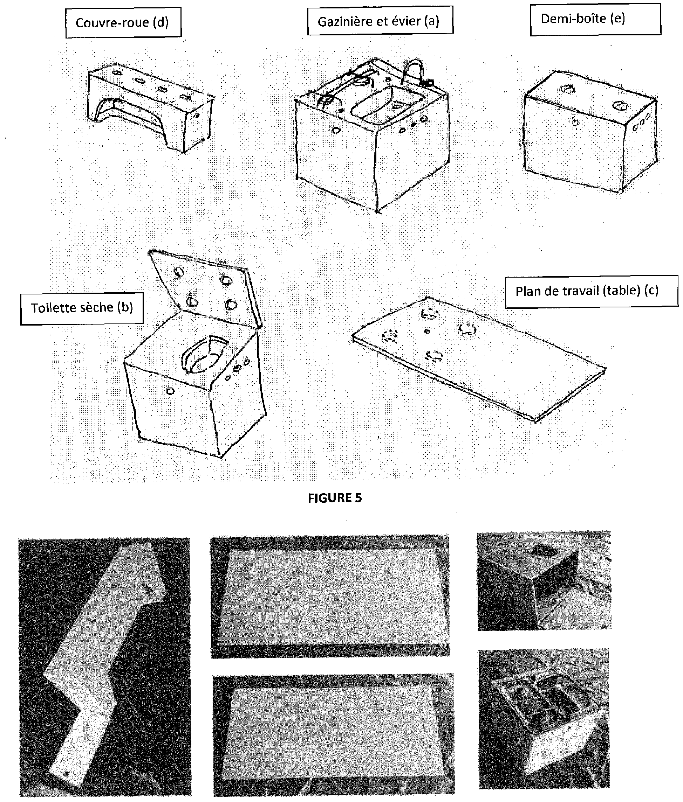

- La figure 5 représente en perspectives et photos quelques boites et pièces spéciales venant compléter l'idée d'aménagement de l'invention.

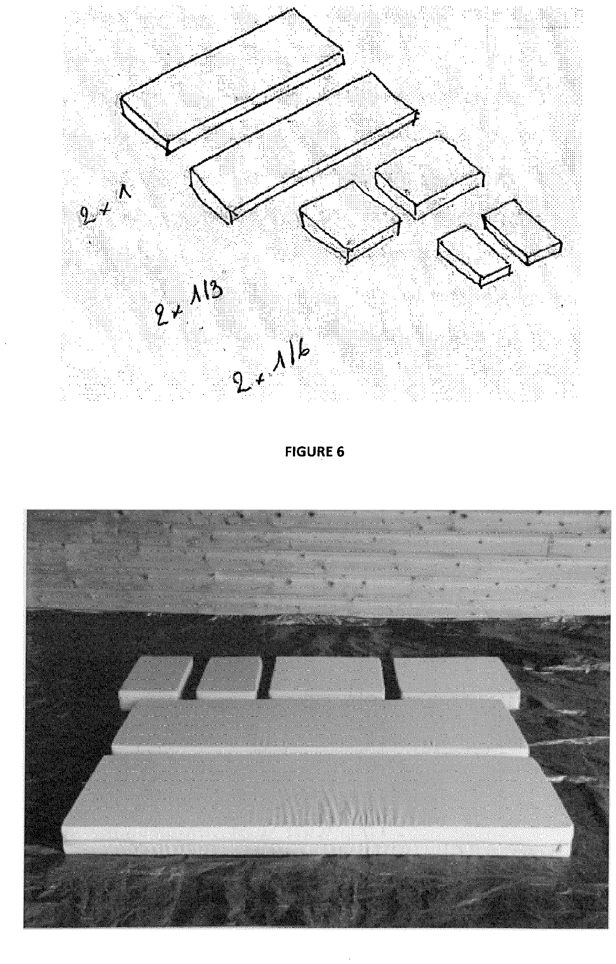

- La figure 6 représente en plan le jeu de blocs de mousse permettant, dans les différentes combinaisons des aménagements loisirs de l'invention, de venir recouvrir les assises et les positions de couchage.

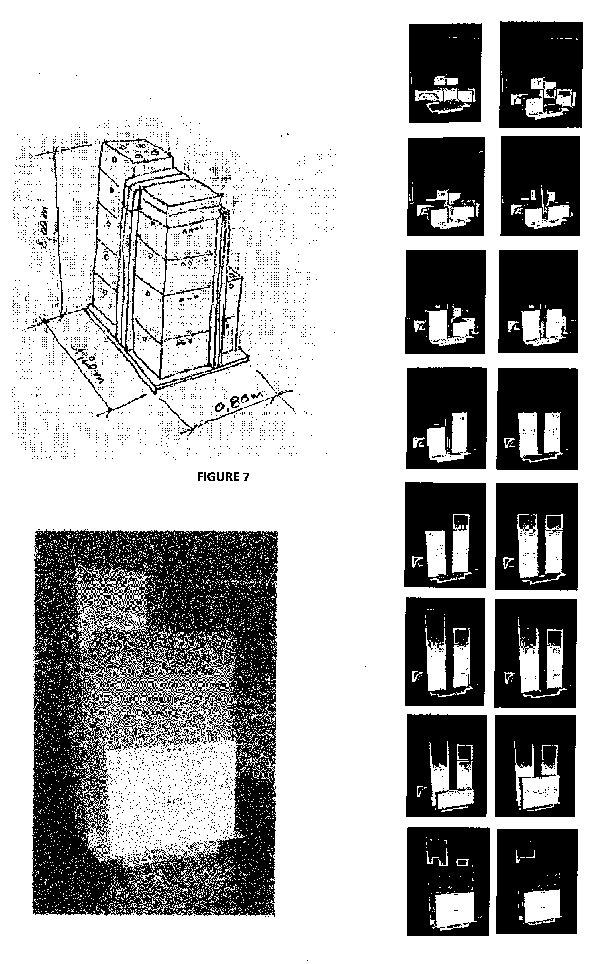

- La figure 7 représente en perspective et photos l'encombrement maximal de l'invention en position de stockage des éléments de l'invention.

En référence à ces dessins, le dispositif comporte :
Le plancher personnalisé (figure 1), est percé d'une multitude de « trous » circulaires (4) de diamètre x tous équidistants entre eux d'un espace (a), est doté d'écrous « à frapper » (3) de diamètre y incrustés dans le bois et disposés à équidistance des « trous », et équidistants d'un espace (a) entre eux.

**La boite type** (figure 2) est composée : d'un fond carré (a) percé en son centre (1) en diamètre y' et disposant de 4 « ergots de centrage » (2) de diamètre x' ; d'un dessus carré (b) équipé en son centre d'un écrou à frapper (3) de diamètre y et percé de 4 trous circulaires (4) de diamètre x ; d'une paroi verticale arrière (c), d'une paroi (d) sur chaque côté percée chacune de 3 trous (5) permettant d'agripper la boite avec les mains ; d'une façade amovible (e) équipée d'un système escamotable (ici percée d'un trou (6) et d'aimants (7)). A titre d'exemple non limitatif, la boite aura des dimensions de l'ordre de 50cm x 50cm x 40cm ht.

**L'assemblage** (figure 3), entre boites ou sur le plancher, se fait par un centrage instantané grâce à l'emboitement des ergots (2) dans les trous (4), et par boulonnage d'un boulon (8) dans l'écrou à frapper (3). Sur le plan horizontal, les boites peuvent prendre - position selon quatre orientations différentes ; ainsi la porte de façade peut se trouver en position avant, arrière, ou sur l'un des 2 côtés ; entre les boites, il est prévu un espace (9) de dimension unique z, et qui a 2 fonctions : celle de permettre d'attraper facilement les boites lorsqu'elles sont côte à côte, et celle de rendre le système universel. A titre d'exemple non limitatif, l'espace entre les boites sera de l'ordre de 2,5 cm.

**Les combinaisons** (figure 4) sont nombreuses et multiples, imaginables à l'envie. A titre d'exemples non limitatifs, les perspectives 1 à 8 décrivent quelques possibilités de combinaisons d'assemblages avec un jeu de 9 boites. Ainsi l'espace dinette et la table peuvent être disposés indifféremment à l'avant, l'arrière, ou sur les côtés ; les boites peuvent être disposées à plat et de différentes façons pour étaler les coussins et constituer un lit, ou empilées sur l'un ou l'autre des côtés pour pouvoir embarquer du matériel encombrant tels que tondeuses, caisses à outils, vélos ou planches à voile...

**Des boites et pièces spéciales** (figure 5) viennent agrémenter le confort à bord : une boîte dinette (a) à l'intérieur de laquelle viendront se loger le jerrican d'eau potable, le jerrican d'eau usée, et la bouteille de gaz ; une boite WC sec (b) ; un plan de travail (c) muni de 4 ergots (2) et d'un trou centré (1) pour permettre sa fixation sur une boite ; les boites dé passages de roues (d) munies chacune de 2 ergots de centrage (2) et d'un trou de fixation en partie basse, et de 4 trous de centrage sur la face supérieure ; et d'autres innovations utiles à imaginer qui viendront agrémenter l'aménagement telle que demi-boîte (e) par exemple.

**Un jeu de matelas mousses** amovibles (figure 6) de plusieurs dimensions permettant une bonne adaptation aux différentes combinaisons d'assises et de couchages.

**Un encombrement de stockage très faible** (figure 7) facilité par l'empilage des boites et des coussins dans un volume d'environ 0,80m prof x 1,20m larg x 2,00m ht.

Le dispositif selon l'invention est particulièrement destiné à l'aménagement de fourgons, dans des combinaisons multiples, indifféremment pour un usage utilitaire (type aménagement de casiers professionnels) ou pour un usage loisirs (de type aménagement en camping-car).

## Revendications

1. Dispositif pour aménager un véhicule fourgon utilitaire, **caractérisé en ce qu'**il comprend un plancher amovible adaptable au type de véhicule, et un jeu de boites identiques amovibles empilables les unes sur les autres et sur le plancher, le dispositif étant adapté pour réaliser par une personne seule un nombre de combinaisons de différents assemblages du jeu de boites sur le plancher, lesdits boites étant assemblées sur le plancher en laissant horizontalement un espace (9) entre chaque boite.

2. Dispositif selon la revendication 1, **caractérisé en ce que** la boite est à embase carrée et est équipée en sous-face d'ergots de centrage (2) et d'un trou de vissage (1), pour pouvoir la fixer de manière amovible sur le plancher ou sur une autre boite, et en son dessus de trous de centrage (4) et d'un écrou à frapper (3) pour pouvoir emboiter et fixer une autre boite par empilage sur le dessus.

3. Dispositif selon la revendication 1 et la revendication 2, **caractérisé en ce que** le plancher amovible adaptable au véhicule est muni de plusieurs trous de centrage (4) et de plusieurs écrous de centrage (3) respectivement équidistants, la distance entre écrous de centrage (3) voisins étant plus grand qu'une largeur de boite, pour créer l'espace (9) laissé horizontalement entre chaque boite..

4. Dispositif selon la revendication 3, **caractérisé en ce que** les boites peuvent être parfaitement assemblées et fixées sur le plancher ou entre elles à l'aide de boulons (8) permettant de réaliser des combinaisons multiples d'assemblages grâce à l'espace (9) laissé horizontalement entre chaque boite, et à la possibilité d'emboiter les boites les unes sur les autres.

5. Dispositif selon l'une quelconque des revendications précédentes, **caractérisé en ce qu'**il comprend des boites et pièces spéciales, conçues pour agrémenter et adapter le véhicule à différents usages.

6. Dispositif selon l'une quelconque des revendications précédentes, **caractérisé en ce qu'**il comprend des blocs de mousse pour les assises et matelas de couchage adaptables aux combinaisons imaginées.

7. Dispositif selon l'une quelconque des revendications précédentes, **caractérisé en ce qu'**il comprend une palette de dimensions standards 120 cm x 80 cm permettant de stocker par empilage l'ensemble des équipements dans un espace réduit.

## Patentansprüche

1. Vorrichtung zur Ausrüstung eines Nutzfahrzeugs, **dadurch gekennzeichnet, dass** es einen abnehmbaren Boden, der an den Fahrzeugtyp angepasst werden kann, sowie einen Satz identischer, abnehmbarer, aufeinander und auf den Boden stapelbarer Behälter enthält, wobei die Vorrichtung dafür geeignet ist, dass eine einzige Person eine Anzahl verschiedener Kombinationen des Behältersatzes auf dem Boden ausführen kann, wobei diese Behälter mit dem Boden verbunden sind und wobei horizontal ein Zwischenraum (9) zwischen den einzelnen Behältern vorgesehen ist.

2. Vorrichtung nach Anspruch 1, **dadurch gekennzeichnet, dass** der Behälter eine quadratische Grundfläche hat und auf der Unterseite über Zentriernasen (2) und ein Schraubloch (1) verfügt, um ihn abnehmbar auf dem Boden oder einem anderen Behälter befestigen zu können, und er auf der Oberseite über Zentrierlöcher (4) und eine Schlagmutter (3) verfügt, um einen anderen darüber gestapelten Behälter einrasten und befestigen zu können.

3. Vorrichtung nach Anspruch 1 und Anspruch 2, **dadurch gekennzeichnet, dass** der an das Fahrzeug anpassbare, abnehmbare Boden über mehrere Zentrierlöcher (4) und mehrere Zentriermuttern (3), jeweils in gleichem Abstand, verfügt, wobei der Abstand zwischen benachbarten Zentriermuttern (3) dabei größer als eine Behälterbreite ist, um den horizontal zwischen den einzelnen Behältern vorgesehenen Zwischenraum (9) herzustellen.

4. Vorrichtung nach Anspruch 3, **dadurch gekennzeichnet, dass** die Behälter auf dem Boden oder miteinander perfekt mit Bolzen (8) verbunden und befestigt werden können, die dank des horizontal zwischen den einzelnen Behältern vorgesehenen Zwischenraums (9) und der Möglichkeit, die Behälter eingerastet aufeinander zu stapeln, die Ausführung zahlreicher Verbindungen ermöglichen,.

5. Vorrichtung nach einem der vorangehenden Ansprüche, **dadurch gekennzeichnet, dass** sie außerdem Behälter und Spezialteile umfasst, die dazu konzipiert sind, das Fahrzeug für verschiedene Nutzungszwecke einzurichten und anzupassen.

6. Vorrichtung nach einem der vorangehenden Ansprüche, **dadurch gekennzeichnet, dass** sie Schaumstoffblöcke für Sitze und Schlafmatratzen enthält, die für die gedachten Kombinationen angepasst werden können.

7. Vorrichtung nach einem der vorangehenden Ansprüche, **dadurch gekennzeichnet, dass** sie eine Palette mit den Standardmaßen 120 cm x 80 cm enthält, auf der die gesamte Ausrüstung durch Aufeinanderstapeln in einem engen Raum gelagert werden kann.

## Claims

1. Device for fitting a utility van vehicle, **characterized in that** it comprises a removable floor adaptable to the type of vehicle, and a set of identical removable boxes stackable on top of each other and on the floor, the device being adapted so that a single person can obtain a number of combinations of different assemblies of the set of boxes on the floor, said boxes being assembled on the floor leaving a horizontal space (9) between of them.

2. Device according to claim 1, **characterized in that** the box has square-base and on its underside has with centering pins (2) and a screw hole (1), for removably attaching it to the floor or to another box, and on its top with centering holes (4) and an impact nut (3) for stacking and attaching another box on top.

3. Device according to claim 1 and claim 2, **characterized in that** the removable floor adaptable to the vehicle is provided with several centering holes (4) and several centering nuts (3) equidistantly spaced with respect to one another, the distance between adjacent centering nuts (3) being greater than the width of a box, to create a space (9) left horizontally between each box.

4. Device according to claim 3, **characterized in that** the boxes can be accurately assembled and attached to the floor or to each other by means of bolts (8), enabling to make multiple combinations of assemblies thanks to the space (9) left horizontally between each box, and to the possibility of nesting the boxes on top of each other.

5. Device according to any of the preceding claims, **characterized in that** it comprises boxes and special parts, designed to enhance and adapt the vehicle for various purposes.

6. Device according to any of the preceding claims, **characterized in that** it comprises foam blocks serving as seats and sleeping mattresses adaptable to the imagined combinations.

7. Device according to any one of the preceding claims, **characterized in that** it comprises a pallet having standard dimensions of 120cm x 80cm allowing storage to be effected by stacking all the equipment in a small space.
